# EUROPEAN PATENT SPECIFICATION

(11) **EP 2 883 648 B1**
(45) Date of publication and mention of the grant of the patent: **04.09.2019**
(21) Application number: 14806156.7
(22) Date of filing: 31.07.2014
(51) Int. Cl.: B23K 26/38, B23K 26/08, B23K 26/00, B23K 26/10, B23K 26/40

(54) **LASER CUTTING APPARATUS AND CUTTING METHOD THEREFOR**
LASERSCHNEIDVORRICHTUNG UND VERFAHREN
APPAREIL DE COUPE AU LASER ET MÉTHODE DE COUPE ASSOCIÉE

(30) Priority: 25.09.2013 KR 20130114003
(43) Date of publication of application: 17.06.2015
(73) Proprietor: LG Chem, Ltd., Seoul 150-721 (KR)
(72) Inventor: BAN, Jin Ho, Daejeon 305-738 (KR); AHN, Chang Bum, Daejeon 305-738 (KR); MIN, Ki Hong, Daejeon 305-738 (KR); PARK, Ji Won, Daejeon 305-738 (KR); KO, Myung Hoon, Daejeon305-738 (KR); NA, Seung Ho, Daejeon 305-738 (KR)
(74) Representative: Cabinet Plasseraud
(86) International application number: PCT/KR2014/007052
(87) International publication number: WO 2015/046738

(56) References cited:
- WO-A1-93/12905
- WO-A1-2005/026238
- WO-A1-2012/063668
- WO-A1-2013/065484
- JP-A- S6 390 381
- JP-A- 2006 226 727
- KR-A- 20030 040 875
- KR-A- 20080 079 828
- KR-A- 20110 093 348
- KR-A- 20130 103 357

## Description

### TECHNICAL FIELD

The present invention relates to a cutting device using a laser (see, e.g., WO 93/12905), and a method which changes a cutting speed of a laser according to a difference between characteristics (e.g. absorption coefficients) of an object to be cut, so as to uniformly supply an energy of laser to the whole of the object, thereby preventing the object from being incompletely cut (see, e.g., JP S63 90381 A).

### BACKGROUND

Lasers are widely used not only in general industry fields such as the fields of cutting, shaping, and welding, but also in the fields of medical devices, optical communications, and computer industries. In particular, cutting devices using a laser are widely used to cut glass or metal.

However, typical cutting devices emit the same laser beam at the same speed even when an object to be cut has different characteristics according to regions thereof. Thus, the object may be abnormally cut in a part of the regions. As a result, the object may be incompletely cut.

Thus, according to embodiments of the present invention, even when an object to be cut includes regions having different characteristics, the object can be completely cut, allowing for the different characteristics.

### SUMMARY OF THE INVENTION

The present invention aims at providing a cutting device and method as defined in the attached set of claims, which completely cuts an object even when the object includes regions having different characteristics. A laser cutting device according to the present invention is disclosed in claim 1. Further preferred embodiments of the laser cutting device are disclosed in claims 2-6.

A method according to the present invention is disclosed in claim 7. Further embodiments of the inventive method are disclosed in claims 8-10.

### BRIEF DESCRIPTION OF THE DRAWINGS

FIG. 1 is a view illustrating a configuration of a laser cutting device according to an embodiment of the present invention;
FIG. 2 is a view illustrating a cutting method according to an embodiment of the present invention; and
FIG. 3 is a view illustrating a configuration of a laser cutting device according to an embodiment of the present invention.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION

Hereinafter, exemplary embodiments of the present invention will be described in detail with reference to the accompanying drawings. Prior to this, terms or words used in the present specification and claims should not be interpreted as being limited to typical or dictionary meanings, but should be interpreted as having meanings and concepts which comply with the technical spirit of the present invention, based on the principle that an inventor can appropriately define the concept of the term to describe his/her own invention in the best manner. Therefore, configurations illustrated in the embodiments and the drawings described in the present specification are only the most preferred embodiments of the present invention.

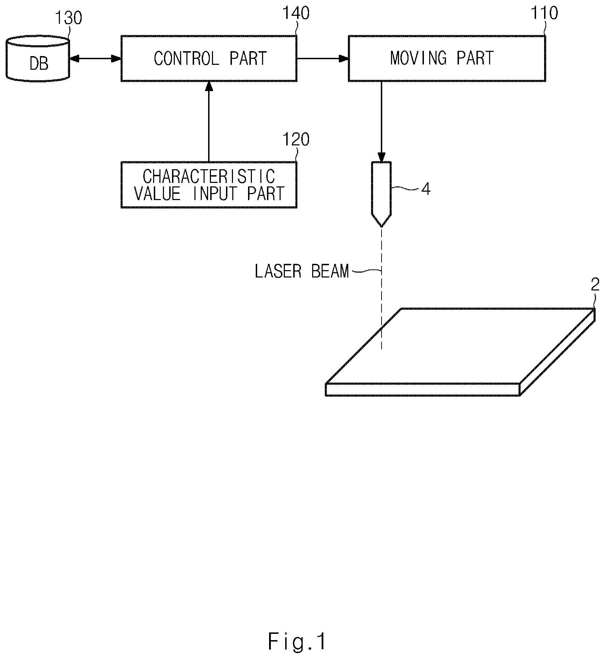

FIG. 1 is a view illustrating an examplary configuration of a laser cutting device not falling under the scope of the claims.

Referring to FIG. 1, a laser cutting device includes a moving part 110, a characteristic value input part 120, a database 130, and a control part 140.

The moving part 110 moves a laser 4 according to a control of the control part 140, thereby changing (moving) a location of a laser beam emitted to an object 2 to be cut. In particular, the moving part 110 not only changes the location of the laser beam, but also increases or decreases a moving speed of the laser beam according to the control of the control part 140.

The characteristic value input part 120, which is a user interface device including a plurality of input keys, receives speed information from a user according to locations on a preset cutting pattern and transmits the speed information to the control part 140.

The database 130 stores information about the preset cutting pattern. The cutting pattern is a design pattern for an object to be formed (for example, an electrode of a secondary battery). The laser beam cuts the object 2 according to the cutting pattern. The database 130 stores characteristic information of the object 2 according to the locations on the cutting pattern. For example, the database 130 may store information for determining whether the object 2 is coated in the locations on the cutting pattern, and a color of a location in which the object 2 is coated. In particular, the database 130 may store information about absorption coefficient of the object 2 according to the locations on the cutting pattern, as the characteristic information.

The control part 140 adjusts the moving speed of the laser beam by controlling the moving part 110 according to the speed information transmitted from the characteristic value input part 120, and the information about the cutting pattern stored in the database 130. That is, the control part 140 controls the moving part 110 to emit the laser beam according to the cutting pattern, and adjusts the moving speed of the laser beam according to the locations on the cutting pattern and the speed information transmitted from the characteristic value input part 120, without moving the laser beam at the same speed over the whole of the cutting pattern.

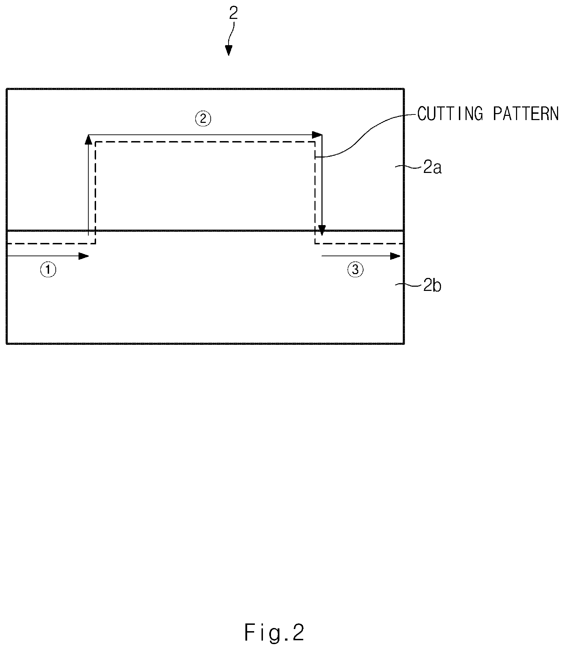

FIG. 2 is a view illustrating a exemplary cutting method not falling under the scope of the claims.

The object 2, which is a material film for forming an electrode of a secondary battery, is divided into a first region 2a constituted by a metal thin film, and a second region 2b constituted by a metal thin film and an active material and having a surface coated with a specific color. Thus, a surface of the first region 2a is different in absorption coefficient from the surface of the second region 2b. That is, the first region 2a has an absorption coefficient smaller than that of the second region 2b. Such information may be stored in the database 130.

Portions ① and ③ of the preset cutting pattern are disposed in the second region 2b, and a portion ② of the preset cutting pattern is disposed in the first region 2a, in a design process, as depicted with dotted lines of FIG. 2. Thus, when the preset cutting pattern is entirely cut under the same condition, the portions ① and ③ disposed in the second region 2b having the great absorption coefficient are normally cut, but the portion ② disposed in the first region 2a having the small absorption coefficient may be abnormally cut since an energy of the laser beam absorbed in the object 2 corresponding to the portion (2) is small. That is, the portion (2) may be incompletely cut.

Thus, the user uses the information about the cutting pattern and the characteristic information of the object 2 according to the locations on the cutting pattern, which are stored in the database 130, to determine a section of the cutting pattern disposed in the first region 2a, a section of the cutting pattern disposed in the second region 2b, and the difference between absorption coefficients of the sections. After that, the user uses the characteristic value input part 120 to set different speed values in the locations on the cutting pattern, thereby corresponding to the difference between the absorption coefficients of the first and second regions 2a and 2b.

The control part 140 controls the moving part 110 according to the speed information set by the user such that a moving speed of the laser beam when passing through a portion of the cutting pattern disposed in the first region 2a is lower than a moving speed of the laser beam when passing through a portion of the cutting pattern disposed in the second region 2b. Accordingly, energy is uniformly absorbed in both the portions of the cutting pattern disposed in the first region 2a and the second region 2b.

Thus, all regions of the cutting pattern can be completely cut.

Although only the second region 2b is coated in the exemplary method, a case in which the first second region 2a and the second region 2b are coated with colors having different absorption coefficients may be applied to the cutting method.

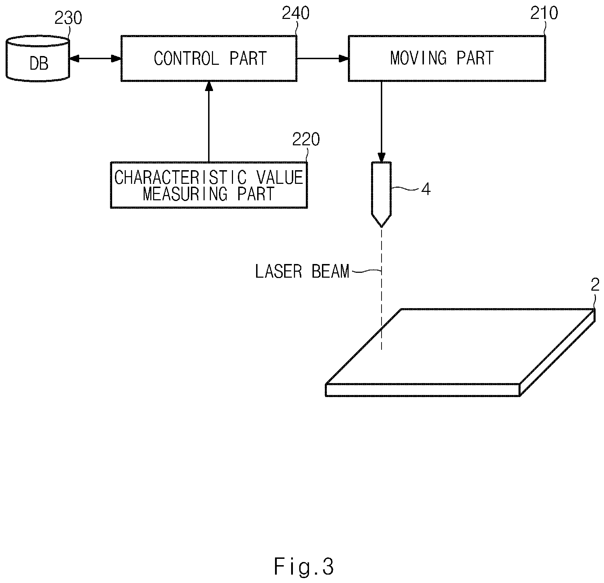

FIG. 3 is a view illustrating a configuration of a laser cutting device according to an embodiment of the present invention.

The user personally inputs the speed information in the example of FIG. 1. However, according to the embodiment of FIG. 3, absorption coefficients of an object to be cut according to locations on a cutting pattern are automatically calculated, and moving speeds of a laser beam are automatically set according to the calculated absorption coefficients.

Referring to FIG. 3, a laser cutting device includes a moving part 210, a characteristic value measuring part 220, a database 230, and a control part 240.

The moving part 210 moves a laser 4 according to a control of the control part 240, thereby changing (moving) a location of a laser beam emitted to an object (2) to be cut, like the embodiment of FIG. 1.

The characteristic value measuring part 220 measures characteristic values of the object 2 according to locations on a cutting pattern by emitting a scanning laser beam to the entire cutting pattern before laser cutting, and transmits the measured characteristic values to the control part 240. In this case, the characteristic value measuring part 220 may measure absorption coefficients as the characteristic values.

For example, before a cutting process, the characteristic value measuring part 220 emits a scanning laser beam to the object 2 according to the cutting pattern, and receives a laser beam reflected from the object 2 according to the emitting of the scanning laser beam. After that, the characteristic value measuring part 220 compares amounts of light of the received laser beam with amounts of light of the emitted scanning laser beam according to the locations on the cutting pattern, thereby measuring the absorption coefficients of the object 2 according to the locations on the cutting pattern. Alternatively, before the cutting process, the characteristic value measuring part 220 emits the scanning laser beam to the object 2 according to the cutting pattern, and receives a laser beam passed through the object 2 according to the emitting of the scanning laser beam. After that, the characteristic value measuring part 220 compares intensities of light of the passed through laser beam with intensities of light of the emitted scanning laser beam, thereby measuring the absorption coefficients of the object 2 according to the locations on the cutting pattern. When an absorption coefficient of an object to which light passes, a propagation distance, and intensities of the light before and after propagating over the propagation distance are denoted by a(cm⁻¹), x(cm), I₀, and I, respectively, a formula I = I₀e^{-ax} may be defined, wherein Fresnel reflection on a surface of the object is neglected.

Thus, when an intensity of light of an emitted laser beam, and an intensity of light of a laser beam passed through an object are known, an absorption coefficient of the object is determined.

The database 230 stores information about the cutting pattern, and speed information according to absorption coefficients. For example, the database 230 may store a table of speed information, pieces of which correspond to the absorption coefficients, respectively. The speed information may be classified according to wavelengths of used laser beams and be stored.

A cutting method will now be described with reference to FIGS. 2 and 3.

Before laser cutting, the characteristic value measuring part 220 emits the scanning laser beam according to the cutting pattern depicted with the dotted line of FIG. 2, and receives the laser beam reflected from the object 2 according to the cutting pattern or the laser beam passed through the object 2.

Next, the characteristic value measuring part 220 calculates the absorption coefficients of the object 2 according to the locations on the cutting pattern by using the emitted laser beam and the received laser beam. For example, the characteristic value measuring part 220 measures the absorption coefficients of the object 2 according to the locations on the cutting pattern by comparing an amount of light of the emitted laser beam with an amount of light of the received laser beam or comparing an intensity of light of the emitted laser beam with an intensity of light of the passed through laser beam. The measured absorption coefficients are transmitted to the control part 240. That is, the absorption coefficients corresponding to the portions ①, ②, and ③ of the cutting pattern are transmitted to the control part 240.

The control part 240 uses the absorption coefficients according to the locations on the cutting pattern transmitted from the characteristic value measuring part 220, to search for the speed information corresponding to the absorption coefficients in the database 230. Accordingly, speed values corresponding to the portions ①, ②, and ③ of the cutting pattern are determined.

The control part 240 controls the moving part 210 according to the determined speed values such that a moving speed of the laser beam when passing through a portion of the cutting pattern disposed in the first region 2a is lower than a moving speed of the laser beam when passing through a portion of the cutting pattern disposed in the second region 2b. Accordingly, energy is uniformly absorbed in both the portions of the cutting pattern disposed in the first region 2a and the second region 2b.

Thus, all regions of the cutting pattern can be completely cut.

While the foregoing preferred embodiments of the present invention have been exemplified, it will be understood by those of ordinary skill in the art that various modifications, changes, replacements, and additions could be made therein without departing from the scope of the present invention as defined by the following claims.

For example, instead of moving the laser 4 by means of the moving parts 110 and 210 as illustrated in FIGS. 1 and 3, a shelf on which the object 2 is placed may be moved to change the location of the laser beam emitted to the object 2.

According to the embodiments of the present invention, even when an object to be cut includes regions having different characteristics, the object can be completely cut.

The exemplary embodiments of the present invention are illustrative only, and various modifications, changes, substitutions, and additions may be made without departing from the scope of the appended claims by those skilled in the art, and it will be appreciated that the modifications and changes are included in the appended claims.

## Claims

1. A laser cutting device comprising:
a database (130, 230) suitable for storing information about a cutting pattern, and speed information according to characteristic values of an object (2) to be cut;
a moving part (110, 210) suitable for changing a location of a laser beam emitted to the object (2);
a part suitable for measuring a characteristic value according to locations on the cutting pattern, the part is suitable for emitting a scanning laser beam to an entire cutting pattern; and
a control part (140, 240),
**characterized in that** the control part (140, 240) is configured to determine moving speeds according to the locations on the cutting pattern by matching the speed information stored in the database (130, 230) with the characteristic values measured at the measuring part by emitting the scanning laser beam to the entire cutting pattern before laser cutting, and is configured to control the moving part (110, 210) according to the moving speeds to adjust a moving speed of the laser beam.

2. The laser cutting device of claim 1, wherein the part suitable for measuring a characteristic value is suitable for measuring absorption coefficients of the object (2) according to the locations on the cutting pattern.

3. The laser cutting device of claim 2, wherein a part suitable for measuring a characteristic value is suitable for emitting a scanning laser beam to the object (2) according to the cutting pattern, and is then suitable to compare amounts of light of the scanning laser beam with amounts of light of a reflected laser beam according to the locations on the cutting pattern, thereby being suitable to measure the absorption coefficients of the object (2) according to the locations on the cutting pattern.

4. The laser cutting device of claim 2, wherein a part suitable for measuring a characteristic value is suitable for emitting a scanning laser beam to the object (2) according to the cutting pattern, and is then suitable to use intensities of light of the scanning laser beam and intensities of light of a laser beam passed through the object (2), thereby being suitable to measure the absorption coefficients of the object (2) according to the locations on the cutting pattern.

5. The laser cutting device of claim 1, wherein the moving part (110, 210) is suitable to move a laser (4) for emitting the laser beam.

6. The laser cutting device of claim 1, wherein the moving part (110, 210) is suitable to move a shelf on which the object (2) is placed.

7. A laser cutting method for a laser cutting device, comprising:
emitting a scanning laser beam to an entire cutting pattern and measuring characteristic values of the object (2) according to locations on the cutting pattern; and
emitting a laser beam for cutting according to the cutting pattern to cut the object (2),
a moving speed of the laser beam for cutting is changed depending on the characteristic values,
**characterized in that** said emitting the scanning laser beam to the entire cutting pattern is before the laser cutting.

8. The laser cutting method of claim 7, wherein the characteristic values include absorption coefficients of the objects (2).

9. The laser cutting method of claim 8, wherein the absorption coefficients are measured by emitting a scanning laser beam to the object (2) according to the cutting pattern, and then, comparing amounts of light of the scanning laser beam with amounts of light of a reflected laser beam according to the locations on the cutting pattern.

10. The laser cutting method of claim 8, wherein the absorption coefficients are measured by emitting a scanning laser beam to the object (2) according to the cutting pattern, and then, using intensities of light of the scanning laser beam and intensities of light of a laser beam passed through the object (2).

## Patentansprüche

1. Laserschneidvorrichtung, welche aufweist:
eine Datenbank (130, 230), die dazu geeignet ist, Information über ein Schneidmuster sowie Geschwindigkeitsinformation gemäß Kennwerten eines zu schneidenden Objekts (2) zu speichern;
ein Bewegungsteil (110, 210), das dazu geeignet ist, einen Ort eines zu dem Objekt (2) ausgegebenen Laserstrahls zu ändern;
ein Teil, das dazu geeignet ist, einen Kennwert gemäß Orten auf dem Schneidmuster zu messen, wobei das Teil dazu geeignet ist, einen Abtastlaserstrahl auf ein gesamtes Schneidmuster abzugeben; und
ein Steuerteil (140, 240),
**dadurch gekennzeichnet, dass** das Steuerteil (140, 240) konfiguriert ist, um Bewegungsgeschwindigkeiten gemäß den Orten auf dem Schneidmuster zu bestimmen, durch Abgleich der Geschwindigkeitsinformation, die in der Datenbank (130, 230) gespeichert ist, mit den Kennwerten, die an dem Messteil durch Abgeben des Abtastlaserstrahls auf das gesamte Schneidmuster vor Laserschneiden gemessen werden, und konfiguriert ist, um das Bewegungsteil (110, 210) gemäß den Bewegungsgeschwindigkeiten zu steuern, um eine Bewegungsgeschwindigkeit des Laserstrahls einzustellen.

2. Die Laserschneidvorrichtung von Anspruch 1, wobei das Teil, das zum Messen eines Kennwerts geeignet ist, dazu geeignet ist, Absorptionskoeffizienten des Objekts (2) gemäß den Orten auf dem Schneidmuster zu messen.

3. Die Laserschneidvorrichtung von Anspruch 2, wobei ein Teil, das zum Messen eines Kennwerts geeignet ist, dazu geeignet ist, einen Abtastlaserstrahl auf das Objekt (2) gemäß dem Schneidmuster abzugeben, und dann dazu geeignet ist, Lichtmengen des Abtastlaserstrahls mit Lichtmengen eines reflektierten Laserstrahls gemäß den Orten des Schneidmusters zu vergleichen, um hierdurch in der Lage zu sein, die Absorptionskoeffizienten des Objekts (2) gemäß den Orten auf dem Schneidmuster zu messen.

4. Die Laserschneidvorrichtung von Anspruch 2, wobei ein Teil, das zum Messen eines Kennwerts geeignet ist, dazu geeignet ist, einen Abtastlaserstrahl auf das Objekt (2) gemäß dem Schneidmuster abzugeben, und dann dazu geeignet ist, in Lichtintensitäten des Abtastlaserstrahls und Lichtintensitäten eines durch das Objekt (2) hindurchgehenden Laserstrahls zu verwenden, um hierdurch in der Lage zu sein, die Absorptionskoeffizienten des Objekts (2) gemäß den Orten auf dem Schneidmuster zu messen.

5. Die Laserschneidvorrichtung von Anspruch 1, wobei das Bewegungsteil (110, 210) dazu geeignet ist, einen Laser (4) zum Abgeben des Laserstrahls zu bewegen.

6. Die Laserschneidvorrichtung von Anspruch 1, wobei das Bewegungsteil (110, 210) dazu geeignet ist, eine Ablage zu bewegen, auf der das Objekt (2) angeordnet ist.

7. Laserschneidverfahren für eine Laserschneidvorrichtung, welches aufweist:
Abgeben eines Abtastlaserstrahls auf ein gesamtes Schneidmuster und Messen von Kennwerten des Objekts (2) gemäß Orten auf dem Schneidmuster; und
Abgeben eines Laserstrahls zum Schneiden gemäß dem Schneidmuster, um das Objekt (2) zu schneiden,
wobei eine Bewegungsgeschwindigkeit des Laserstrahls zum Schneiden in Abhängigkeit von den Kennwerten geändert wird,
**dadurch gekennzeichnet, dass** das Abgeben des Abtastlaserstrahls auf das gesamte Schneidmuster vor dem Laserschneiden erfolgt.

8. Das Laserschneidverfahren von Anspruch 7, wobei die Kennwerte Absorptionskoeffizienten der Objekte (2) enthalten.

9. Das Laserschneidverfahren von Anspruch 8, wobei die Absorptionskoeffizienten gemessen werden durch Abgeben eines Abtastlaserstrahls auf das Objekt (2) gemäß dem Schneidmuster, und dann Vergleichen von Lichtmengen des Abtastlaserstrahls mit Lichtmengen eines reflektierten Laserstrahls gemäß den Orten auf dem Schneidmuster.

10. Das Laserschneidverfahren von Anspruch 8, wobei die Absorptionskoeffizienten gemessen werden durch Abgeben eines Abtastlaserstrahls auf das Objekt (2) gemäß dem Schneidmuster, und dann Verwenden von Lichtintensitäten des Abtastlaserstrahls und Lichtintensitäten eines durch das Objekt (2) hindurch gegangenen Laserstrahls.

## Revendications

1. Dispositif de coupe au laser comprenant :
une base de données (130, 230) apte à mémoriser des informations relatives à un motif de coupe, et des informations de vitesse en fonction de valeurs caractéristiques d'un objet (2) à couper ;
une partie de déplacement (110, 210) apte à changer un emplacement d'un faisceau laser émis vers l'objet (2) ;
une partie apte à mesurer une valeur caractéristique en fonction d'emplacements sur le motif de coupe, la partie étant apte à émettre un faisceau laser de balayage sur un motif de coupe complet ; et
une partie de commande (140, 240),
**caractérisé en ce que** la partie de commande (140, 240) est configurée pour déterminer des vitesses de déplacement en fonction des emplacements sur le motif de coupe en mettant en correspondance les informations de vitesse mémorisées dans la base de données (130, 230) avec les valeurs caractéristiques mesurées au niveau de la partie de mesure par l'émission du faisceau laser de balayage vers le motif de coupe complet avant la coupe au laser, et est configurée pour commander la partie de déplacement (110, 210) en fonction des vitesses de déplacement pour ajuster une vitesse de déplacement du faisceau laser.

2. Dispositif de coupe au laser selon la revendication 1, dans lequel la partie apte à mesurer une valeur caractéristique est apte à mesurer des coefficients d'absorption de l'objet (2) en fonction des emplacements du motif de coupe.

3. Dispositif de coupe au laser selon la revendication 2, dans lequel une partie apte à mesurer une valeur caractéristique est apte à émettre un faisceau laser de balayage vers l'objet (2) en fonction du motif de coupe, puis est apte à comparer des quantités de lumière du faisceau laser de balayage à des quantités de lumière d'un faisceau laser réfléchi en fonction des emplacements sur le motif de coupe, étant de ce fait apte à mesurer les coefficients d'absorption de l'objet (2) en fonction des emplacements sur le motif de coupe.

4. Dispositif de coupe au laser selon la revendication 2, dans lequel une partie apte à mesurer une valeur caractéristique est apte à émettre un faisceau laser de balayage vers l'objet (2) en fonction du motif de coupe, puis est apte à utiliser des intensités de lumière du faisceau laser de balayage et des intensités de lumière d'un faisceau laser passé à travers l'objet (2), étant de ce fait apte à mesurer les coefficients d'absorption de l'objet (2) en fonction des emplacements sur le motif de coupe.

5. Dispositif de coupe au laser selon la revendication 1, dans lequel la partie de déplacement (110, 210) est apte à déplacer un laser (4) pour émettre le faisceau laser.

6. Dispositif de coupe au laser selon la revendication 1, dans lequel la partie de déplacement (110, 210) est apte à déplacer une étagère sur laquelle l'objet (2) est placé.

7. Procédé de coupe au laser pour un dispositif de coupe au laser, comprenant :
l'émission d'un faisceau laser de balayage vers un motif de coupe complet et la mesure de valeurs caractéristiques de l'objet (2) en fonction d'emplacements sur le motif de coupe ; et
l'émission d'un faisceau laser pour une coupe en fonction du motif de coupe afin de couper l'objet (2),
une vitesse de déplacement du faisceau laser pour une coupe est changée selon les valeurs caractéristiques,
**caractérisé en ce que** ladite émission du faisceau laser de balayage vers le motif de coupe complet est avant la coupe au laser.

8. Procédé de coupe au laser selon la revendication 7, dans lequel les valeurs caractéristiques incluent des coefficients d'absorption des objets (2).

9. Procédé de coupe au laser selon la revendication 8, dans lequel les coefficients d'absorption sont mesurés par l'émission d'un faisceau laser de balayage vers l'objet (2) en fonction du motif de coupe, puis la comparaison de quantités de lumière du faisceau laser de balayage à des quantités lumière d'un faisceau laser réfléchi en fonction des emplacements sur le motif de coupe.

10. Procédé de coupe au laser selon la revendication 8, dans lequel les coefficients d'absorption sont mesurés par l'émission d'un faisceau laser de balayage vers l'objet (2) en fonction du motif de coupe, puis l'utilisation d'intensités de lumière du faisceau laser de balayage et d'intensités de lumière d'un faisceau laser passé à travers l'objet (2).
